# EUROPEAN PATENT SPECIFICATION

(11) **EP 1 669 518 B1**
(45) Date of publication and mention of the grant of the patent: **13.02.2008**
(21) Application number: 05111934.5
(22) Date of filing: 09.12.2005
(51) Int. Cl.: E04H 3/10, A47G 33/02

(54) **Method of experiencing a virtual deathbed adventure**
Methode zum Erfahren eines Schein-Sterbebett-Erlebnisses
Procédé d'expérience virtuelle de mise en bière

(30) Priority: 11.12.2004 KR 2004104559
(43) Date of publication of application: 14.06.2006
(73) Proprietor: Choi, Sung Hee, Gunsan-city, 573-913 Jeollabuk-do (KR)
(72) Inventor: Choi, Sung Hee, Gunsan-city, 573-913 Jeollabuk-do (KR)
(74) Representative: Walaski, Jan Filip

(56) References cited:
- PATENT ABSTRACTS OF JAPAN vol. 1999, no. 08, 30 June 1999 (1999-06-30) -& JP 11 062289 A (AICHI KANKONSOUSAI GOJIYOKAI:KK), 5 March 1999 (1999-03-05)
- PATENT ABSTRACTS OF JAPAN vol. 017, no. 088 (M-1370), 22 February 1993 (1993-02-22) -& JP 04 285269 A (TODA CONSTR CO LTD), 9 October 1992 (1992-10-09)

## Description

### BACKGROUND OF THE INVENTION

### 1. Field of the Invention

The present invention relates to a method of experiencing a virtual deathbed adventure in which a virtual deathbed adventure hall is provided to make virtual deathbed adventure trainees feel virtual death as if it were an actual funeral service hall and take actions according to guidance of a guider as if they were dead.

### 2. Description of the Related Art

In order to prepare for his or her sudden death, one can leave one's will in advance or organize his or her thoughts.

Also, people donate their internal organs for other patients after death to thereby save lives of patients who suffer from troubles of internal organs.

From time to time, special insurance guarantees stable lives of families who remain left after his or her death.

However, these things are only consideration of other families or patients after his or her unforeseeable death, but do not have him or her prepare for his or her own past or future life.

In particular, in the case that a certain people committed a crime at the young age, he or she may commit a severer crime due to the absence of a system of illuminating him or her.

We are silent in front of other's death. However, if we are beyond the situation of the death, we may forget the death and live at our original attitudes.

Thus, it is necessary to make people who have a habit of an oblivion look back or forth their past or future through a virtual reality after death with a portrait as if there were dead, to thereby make a common people pursue awakening for a sounder life and criminals reflect on the crimes at a jail to reduce occurrence of a bigger crime.

It is also necessary to look back himself or herself through his or her own portrait or coffin, to thereby make him or her accept a virtual death.

According to the invention, there is provided a method of experiencing a virtual deathbed adventure.

To solve the above problems of the conventional art, it is an object of the present invention to provide a virtual deathbed adventure experiencing method of making virtual deathbed adventure trainees experiencing a virtual deathbed adventure through a preliminary educational procedure at the virtual deathbed adventure hall, and by guiders such as afterworld messengers or angels.

It is another object of the present invention to provide a virtual deathbed adventure experiencing method of making virtual deathbed adventure trainees experience a virtual deathbed adventure by writing their wills, being educated for a virtual deathbed adventure, being guided into a dark virtual deathbed adventure hall, looking at their portraits, being washed and shrouded for their bodies or looking at a dead body washing and shrouding scene as if they were dead, and entering directly into caskets, to thereby make the virtual deathbed adventure trainees more deeply think about their deaths, in order to reflect on what they have not done or have produced mischief, and reflect on their mischief for the rest lives and make them not have fear of death.

It is yet another object of the present invention to provide a virtual deathbed adventure experiencing method of making virtual deathbed adventure trainees such as prisoners, school students or adults experience a virtual deathbed adventure, to thereby make their twisted or violent mentality smoothened so as to be adapted themselves to their social lives and avoid their wrong lives.

To accomplish the above object of the present invention, there is provided a virtual deathbed adventure hall comprising: an adventure space portion having a bright illumination unit and a control box which can control illumination so that the bright illumination unit is turned off and then red light is left at the dark state and an entrance gate door; a funeral service stand including various funeral or cremation service articles such as a portrait of a virtual deceased, a placard wishing the virtual deceased to have heavenly bliss, floral tributes, candlelights, an incense burner, and a mortuary urn which are installed in the adventure space portion; at least one encoffining member which is located in the adventure space portion, and includes a casket in which the virtual deceased is laid, a casket cover, a rubber hammer, and wooden nails; and a virtual dead body washing and shrouding portion including a dead body washing and shrouding stand for washing, shrouding and tying the virtual deathbed adventure trainee or a virtual dead body with a string.

There is also provided a method of experiencing a virtual deathbed adventure comprising the steps of: training virtual deathbed adventure trainees to learn how to write a will, how to wash and shroud a dead body, and how to encoffin watching a moving picture in advance at a virtual deathbed adventure hall; making a guide person playing a role of an afterworld messenger guide the deathbed adventure trainees to a virtual deathbed adventure space portion; making the deathbed adventure trainees write their wills, respectively; making the deathbed adventure trainees take hold of their wills and stand beside caskets in front of which the portraits and wills are put, respectively, at the dark illumination state in which floral tributes, candlelights, an incense burner, a portrait of a virtual deceased, a casket, a mortuary urn, and a gravecloth are installed in the virtual deathbed adventure space portion; making the virtual deathbed adventure trainees wear graveclothes and tied with a string, or see a dead body washing and shrouding procedure; reading their wills or a representative's will among the trainees; ordering the deathbed adventure trainees to wear the graveclothes and enter the caskets; covering the caskets with a cover by driving wooden nails by use of rubber hammers, respectively; coming out from the caskets after about ten minutes by making the casket cover opened; expressing their feelings on the deathbed adventure; and taking a rest or meal or breaking up after coming out from the virtual deathbed adventure hall.

In the virtual deathbed adventure experiencing method, the guiders can make up as a shape of an angel in the Catholic or Protestant.

In the virtual deathbed adventure experiencing method, the step of wearing the graveclothes and tying the dead body with a string further comprises the sub-steps of: washing and shrouding the body of the virtual deathbed adventure trainee; and exposing the face and tying the body with a string.

### BRIEF DESCRIPTION OF THE DRAWINGS

The above and other objects and advantages of the present invention will become more apparent by describing the preferred embodiment thereof in more detail with reference to the accompanying drawings in which:
FIG. 1 is a perspective view schematically showing a virtual deathbed adventure hall; and
FIG. 2 is a perspective view schematically showing a dead body washing and shrouding stand.

### DETAILED DESCRIPTION OF THE INVENTION

A virtual deathbed adventure hall, and a method of experiencing a virtual deathbed adventure using the same according to a preferred embodiment of the present invention will be described with reference to the accompanying drawings.

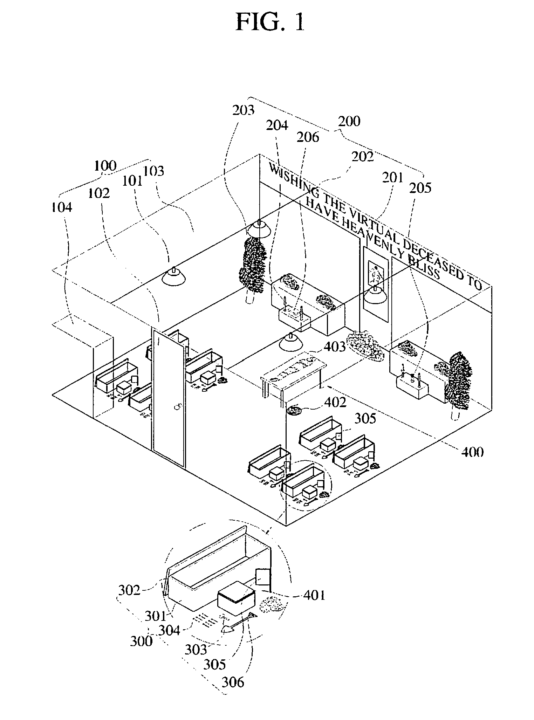

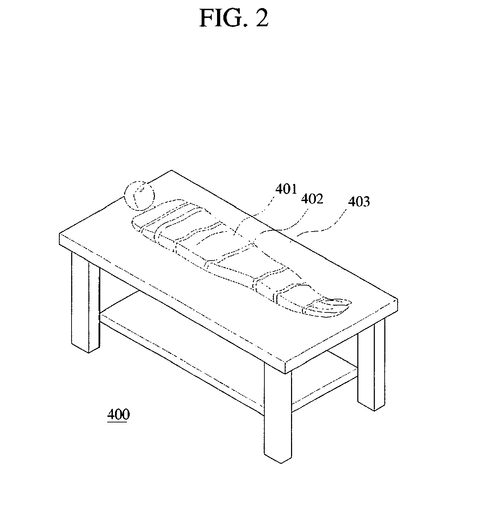

FIG. 1 is a perspective view schematically showing a virtual deathbed adventure hall. FIG. 2 is a perspective view schematically showing a dead body washing and shrouding shape in the virtual deathbed adventure hall.

Referring to FIG. 1, the virtual deathbed adventure hall includes a virtual deathbed adventure space portion 100, a funeral service articles stand 200, an encoffining member 300, and a dead body washing and shrouding portion 400.

The adventure space portion 100 has a space 103 accommodating a bright illumination unit 101 and a control box 104 which can control illumination so that the bright illumination unit is turned off and then red light is left at the dark state and an entrance gate door 102.

Of course, an acoustic device can be installed in a virtual deathbed adventure hall to thereby increase solemnity that virtual deathbed adventure trainees feel and reinforce a virtual deathbed adventure experience. However, such an acoustic device is omitted in this embodiment of the present invention. Also, an air circulation facility and a temperature adjustment facility can be additionally installed in the virtual deathbed adventure hall, to thereby make it possible to provide proper cooling and ventilation according to a variation of seasons. However, such an air circulation facility and a temperature adjustment facility are omitted in this embodiment of the present invention.

The funeral service stand 200 includes various funeral or cremation service articles such as a portrait 201 of a virtual deceased, that is, one of the virtual deathbed adventure trainees, or an operator of the virtual deathbed adventure hall, a placard 202 wishing the virtual deceased to have heavenly bliss, floral tributes 203, candlelights 204, an incense burner 205, and a mortuary urn 206 which are attached to or hung on in the adventure space portion 100. This embodiment of the present invention will be described with reference to the above-described funeral or cremation service articles.

The at least one encoffining member 300 is located in the adventure space portion 100, and includes a casket 301 in which the virtual deceased is laid, a casket cover 302, a rubber hammer 303, and wooden nails 304. Also, the one encoffining member 300 includes a portrait 305 of the virtual deathbed adventure trainee, and a shovel 306 with which soil is scattered on the casket 301.

Referring to FIG. 2, the virtual dead body washing and shrouding portion 400 includes a dead body washing and shrouding stand 403 for washing a virtual deathbed adventure trainee or a virtual dead body, shrouding the virtual deathbed adventure trainee or the virtual dead body with a gravecloth 401, and tying the virtual deathbed adventure trainee or a virtual dead body with a string 402. Instead of the virtual deathbed adventure trainee or the virtual dead body, a synthetic resin model of a human body shape can be used as a virtual dead body for the virtual dead body washing and shrouding procedure. The virtual dead body washing and shrouding procedure is performed on the dead body washing and shrouding stand 403.

Hereinbelow, a virtual deathbed adventure experiencing method using the above-described virtual deathbed adventure hall will be described in more detail.

Likewise, a virtual deathbed adventure hall which is used for a virtual deathbed adventure experiencing method according to the present invention includes a virtual deathbed adventure space portion 100, a funeral service articles stand 200, an encoffining member 300, and a dead body washing and shrouding portion 400.

The virtual deathbed adventure experiencing method according to the present invention includes a first step of training virtual deathbed adventure trainees concerning a virtual deathbed adventure experience in advance, a second step of guiding the deathbed adventure trainees, a third step of washing and shrouding a dead body, a fourth step of encoffining, and a fifth step of expressing feelings on the virtual deathbed adventure experience.

### <First step>

First of all, virtual deathbed adventure trainees are collected via an appropriate advertisement. Then, the virtual deathbed adventure trainees are sufficiently trained to learn why we have to do this training, and what we have to obtain through this training, while making the virtual deathbed adventure trainees watch a moving picture in advance at an independent education facility. After this advance education has been finished, each virtual deathbed adventure trainee is ordered to write his or her own will, and is trained to learn how to wash and shroud a dead body, and how to encoffin which are performed in a virtual deathbed adventure space portion 100 within a virtual deathbed adventure hall.

### <Second step>

After the advance training of the virtual deathbed adventure experience has been fmished, a guide person guides the deathbed adventure trainees taking hold of their wills to a virtual deathbed adventure space portion 100 under dark illumination via an entrance gate door 102. Here, it is preferable that a guide person in the disguise of an afterworld messenger or in the disguise of an angel guides the deathbed adventure trainees, according to the kind of the deathbed adventure trainees.

The virtual deathbed adventure hall includes: a funeral service stand 200 including various funeral or cremation service articles such as a portrait 201 of a virtual deceased, that is, one of the virtual deathbed adventure trainees, or an operator of the virtual deathbed adventure hall, a placard 202 wishing the virtual deceased to have heavenly bliss, floral tributes 203, candlelights 204, an incense burner 205, and a mortuary urn 206 which are attached to or hung on in the adventure space portion 100; at least one encoffining member 300 including a casket 301 in which the virtual deceased is laid, a casket cover 302, a rubber hammer 303, wooden nails 303, a portrait 305 of the virtual deathbed adventure trainee, and a shovel 306; and a virtual dead body washing and shrouding portion 400 including a dead body washing and shrouding stand 403 for washing a virtual deathbed adventure trainee o ra virtual dead body, shrouding the virtual deathbed adventure trainee or the virtual dead body, or a synthetic resin model other than the virtual deathbed adventure trainee or the virtual dead body, with a gravecloth 401, and tying the virtual deathbed adventure trainee or a virtual dead body with a string 402.

The virtual deathbed adventure trainees who have been guided to the virtual deathbed adventure space portion 100 decorated with the above-described funeral or cremation service articles are guided to stand in front of their own portraits and wills, under the guidance of the guide person.

### <Third step>

The virtual deathbed adventure trainees are guided to see a dead body washing and shrouding procedure of washing a dead body, making the dead body worn with a gravecloth 401 and tying the dead body with a string 402, through a separately prepared dead body washing and shrouding portion 400.

Any one virtual deathbed adventure trainee can be joined directly to the dead body washing and shrouding procedure 400, after or during performance of the dead body washing and shrouding procedure.

That is, the designated virtual deathbed adventure trainee is taken off most of clothes, washed through direct skin wash, shrouded with a gravecloth, and then bound with a string at a state where only the face is exposed. Thereafter, an encoffining procedure can be done as it is. Otherwise, one or two virtual deathbed adventure trainees among the virtual deathbed adventure trainees can join the dead body washing and shrouding procedure of washing the dead body, shrouding a gravecloth, and tying the dead body with a string.

Then, any one of or all the virtual deathbed adventure trainee are guided to read their wills. That is, the wills of the virtual deathbed adventure trainees are read in turn or a representative's will among the virtual deathbed adventure trainees is read.

### <Fourth step>

After the trainees' wills or the representative's will has been read, each deathbed adventure trainee is ordered to wear a gravecloth 401 and to be tied with a string 402 loosely and enter the casket 301.

A guide person covers the casket 301 with a cover 302 and couples both the casket 301 and the casket cover 302 by driving wooden nails 304 by use of a rubber hammer 303. Here, the coupling state of the casket cover 302 with the casket 301 through the wooden nails 304 should be easily released by the body or hands of the entered virtual deathbed adventure trainee. Thereafter, prepared soil which is dug by a shovel 306 is covered on the casket 301 coupled with the casket cover 302 via the wooden nails 304. Otherwise, sound to be generated when soil dug by a shovel 306 is covered on a casket 301 is output through an acoustic device. Accordingly, the virtual deathbed adventure trainees can feel that soil is covered on the casket 301 laid in a grave.

Then, the guide person opens the casket cover 302 after lapse of a predetermined time, for example, after ten minutes, so that the virtual deathbed adventure trainee can come out of the casket 301.

### <Fifth step>

After the above-described virtual deathbed adventure experience procedure has been finished, the virtual deathbed adventure trainees are guided to the independent education facility from the virtual deathbed adventure hall , to then express their feelings on the deathbed adventure.

The above-described steps of the virtual deathbed adventure experience procedure can be omitted or new steps can be added. The virtual deathbed adventure experience procedure can be designed in various forms according to the kind of virtual deathbed adventure trainees.

As described above, a virtual deathbed adventure hall provides an effect of making virtual deathbed adventure trainees feel fear and experience a virtual deathbed adventure, in a space including various adventure instruments which are used for a funeral service procedure, for example, a portrait of a virtual deceased, floral tributes, an incense burner or candlestand, a mortuary urn, a dead body washing and shrouding stand, a casket, special illumination facilities, acoustic devices, and so on.

Also, a virtual deathbed adventure experiencing method according to the present invention provides an effect of making virtual deathbed adventure trainees experience virtual deathbed adventure through a preliminary educational procedure at the virtual deathbed adventure hall, and by guiders such as afterworld messengers or angels, to thereby make the virtual deathbed adventure trainees have the right attitudes for the past, present and future lives.

Also, a virtual deathbed adventure experiencing method according to the present invention provides an effect of making virtual deathbed adventure trainees experience a virtual deathbed adventure by writing their wills, being educated for a virtual deathbed adventure, being guided into a dark virtual deathbed adventure hall, looking at their portraits, being washed and shrouded for their bodies or looking at a dead body washing and shrouding scene as if they were dead, and entering directly into caskets, to thereby make the virtual deathbed adventure trainees more deeply think about and prepare for their deaths to confront in the future, in order to reflect on what they have done for the past years, and prepare for their deaths to confront any other time and live positively for the future lives.

Also, a virtual deathbed adventure experiencing method according to the present invention provides an effect of making virtual deathbed adventure trainees such as prisoners, school students or adults experience a virtual deathbed adventure, to thereby make their twisted or violent mentality smoothened so as to be adapted themselves to their social lives and prevent crimes from being committed.

As described above, the present invention has been described with respect to a particularly preferred embodiment. However, the present invention is not limited to the above embodiment, and it is possible for one who has an ordinary skill in the art to make various modifications and variations, without departing of the scope of the present invention.

## Claims

1. A method of experiencing a virtual deathbed adventure comprising the steps of:
training virtual deathbed adventure trainees to learn how to write a will, how to wash, shroud and tie a dead body with a string, and how to encoffin while watching a moving picture in advance at an independent virtual deathbed adventure education facility in a virtual deathbed adventure hall;
making a guide person playing a role of an afterworld messenger guide the deathbed adventure trainees to a virtual deathbed adventure space portion;
making the deathbed adventure trainees write their wills, respectively;
making the deathbed adventure trainees take hold of their wills and stand beside caskets in front of which portraits and wills are put, respectively, at the dark illumination state in which any of floral tributes, candlelights, an incense burner, a portrait of a virtual deceased, a casket, a mortuary urn, and a gravecloth are installed in the virtual deathbed adventure space portion;
reading their wills or a representative's will among the trainees;
ordering the deathbed adventure trainees to wear the graveclothes and enter the caskets;
covering the caskets with a cover by driving wooden nails by use of rubber hammers, respectively; and
making the virtual deathbed adventure trainee come out of the caskets after lapse of a predetermined time by making the casket cover opened by the guide person.

2. The virtual deathbed adventure experiencing method according to claim 1, further comprising the step of expressing their feelings on the deathbed adventure.

3. The virtual deathbed adventure experiencing method according to claim 1, wherein the guider person makes up as a shape of an angel.

4. The virtual deathbed adventure experiencing method according to claim 1, wherein the step of wearing the graveclothes and tying the dead body with a string further comprises the sub-steps of:
laying the body of the virtual deathbed adventure trainee;
washing and shrouding the body of the virtual deathbed adventure trainee; and
exposing the face and tying the body with a string.

## Patentansprüche

1. Verfahren zum Erfahren eines Schein-Totenbett-Erlebnisses, umfassend die folgenden Schritte:
Trainieren von Schein-Totenbett-Erlebnis-Trainees, um zu lernen, wie man einen letzten Willen schreibt, wie man eine Leiche wäscht, mit einem Leichentuch umwickelt und mit einer Schnur bindet, und wie man sie einsargt, während im voraus ein Film betrachtet wird bei einer unabhängigen Schein-Totenbett-Erlebnis-Erziehungseinrichtung in einer Schein-Totenbett-Erlebnis-Halle;
Veranlassen, dass eine Führungsperson, die eine Rolle eines Jenseits-Botschafters spielt, die Totenbett-Erlebnis-Trainees zu einem Schein-Totenbett-Erlebnis-Raumbereich führt;
Veranlassen, dass die Totenbett-Erlebnis-Trainees jeweils ihren letzten Willen schreiben;
Veranlassen, dass die Totenbett-Erlebnis-Trainees ihren letzten Willen ergreifen und neben Kisten stehen, vor die Porträts bzw. letzte Willen platziert sind, und zwar in einem dunklen Beleuchtungszustand, wobei Blumengebinde, Kerzenlichter, ein Weihrauchbrenner, ein Porträt eines Scheintoten, eine Kiste, eine Sterbeurne und/oder ein Grabtuch in dem Schein-Totenbett-Erlebnis-Raumbereich installiert sind;
Verlesen ihrer letzten Willen oder eines letzten Willen eines Vertreters aus den Trainees;
Anordnen, dass die Totenbett-Erlebnis-Trainees die Grabtücher anziehen und in die Kisten steigen;
Abdecken der Kisten mit einem Deckel, indem Holznägel unter Verwendung von Gummihämmern jeweils eingetrieben werden; und
Veranlassen, dass die Schein-Totenbett-Erlebnis-Trainees nach Verstreichen einer vorbestimmten Zeit aus den Kisten herauskommen, indem man veranlaßt, dass die Führungsperson den Kistendeckel öffnet.

2. Schein-Totenbett-Erlebnis-Erfahrungsverfahren nach Anspruch 1, ferner umfassend den Schritt des Ausdrückens ihrer Gefühle über das Totenbett-Erlebnis.

3. Schein-Totenbett-Erlebnis-Erfahrungsverfahren nach Anspruch 1, wobei die Führungsperson in der Gestalt eines Engels aufgemacht ist.

4. Schein-Totenbett-Erlebnis-Erfahrungsverfahren nach Anspruch 1, wobei der Schritt des Anziehens der Grabtücher und des Bindens der Leiche mit einer Schnur ferner die folgenden Unterschritte umfaßt:
Hinlegen des Körpers des Schein-Totenbett-Erlebnis-Trainees;
Waschen und Umhüllen des Körpers des Schein-Totenbett-Erlebnis-Trainees; und
Freilegen des Gesichts und Binden des Körpers mit einer Schnur.

## Revendications

1. Procédé pour expérimenter un événement virtuel de lit de mort comprenant les étapes qui consistent :
à former des élèves d'événements virtuels de lit de mort pour apprendre comment écrire ses volontés, comment laver, envelopper d'un linceul et attacher avec un cordon un cadavre, et comment mettre en bière tout en regardant un film cinématographique à l'avance dans une installation éducative indépendante d'un événement virtuel de lit de mort dans une salle d'événements virtuels de lit de mort ;
à amener une personne, qui constitue un guide jouant un rôle d'un messager de l'au-delà, à guider les élèves de l'événement de lit de mort vers une partie d'espace d'événement virtuel de lit de mort ;
à amener les élèves de l'événement de lit de mort à écrire leurs volontés, respectivement ;
à amener les élèves de l'événement de lit de mort à tenir leurs volontés et à se placer à côté de cercueils devant lesquels des portraits et des volontés sont posés, respectivement, dans l'état de pénombre dans lequel tous présents floraux, cierges, un encensoir, un portrait du défunt virtuel, un cercueil, une urne mortuaire et un linceul sont installés dans la partie d'espace d'événement virtuel de lit de mort;
à lire leurs volontés ou les volontés d'un représentant parmi les élèves;
à ordonner aux élèves de l'événement de lit de mort de porter les linceuls et d'entrer dans les cercueils ;
à recouvrir les cercueils d'un couvercle en enfonçant des clous en bois par l'utilisation de marteaux en caoutchouc, respectivement ; et
à faire sortir des cercueils les élèves de l'événement virtuel de lit de mort après l'écoulement d'un temps prédéterminé par l'ouverture par le guide du couvercle du cercueil.

2. Procédé pour expérimenter un événement virtuel de lit de mort selon la revendication 1, comprenant en outre l'étape consistant à exprimer ses sentiments lors de l'événement de lit de mort.

3. Procédé pour expérimenter un événement virtuel de lit de mort selon la revendication 1, dans lequel le guide prend la forme d'un ange.

4. Procédé pour expérimenter un événement virtuel de lit de mort selon la revendication 1, dans lequel l'étape consistant à porter les linceuls et à attacher le corps du mort avec un cordon comprend en outre les étapes secondaires qui consistent :
à étendre le corps de l'élève de l'événement virtuel de lit de mort ;
à laver et à envelopper le corps de l'élève de l'événement virtuel de lit de mort ; et
à mettre le visage à découvert et à attacher le corps avec un cordon.
